# EUROPÄISCHE PATENTANMELDUNG

(11) **EP 1 586 784 A1**
(43) Veröffentlichungstag der Anmeldung: **19.10.2005**
(21) Anmeldenummer: 05007021.8
(22) Anmeldetag: 31.03.2005
(51) Int. Cl.: F16D 27/00, F16D 48/06

(54) **Verfahren und Kupplungsaktorik zum Betätigen zumindest einer Kupplung in einem Antriebsstrang eines Fahrzeugs**

(30) Priorität: 16.04.2004 DE 102004018378
(71) Anmelder: LuK Lamellen und Kupplungsbau Beteiligungs KG, 77815 Bühl (DE)
(72) Erfinder: Meinhard, Rolf, 77815 Bühl (DE); Reik, Wolfgang, Dr., 77815 Bühl (DE); Raber, Christoph, 66564 Ottweiler-Steinbach (DE); Hill, Wolfgang, 76135 Karlsruhe (DE)

(57) **Zusammenfassung**

Es wird ein Verfahren vorgeschlagen zum Betätigen zumindest einer Kupplung (6) in einem Antriebsstrang eines Fahrzeuges mit einem Verbrennungsmotor und einem automatisierten Getriebe und einer Kupplungsaktorik (8) zur Durchführung des Verfahrens, welche zumindest einen elektromotorischen Stellantrieb (9,11,12,13) aufweist, der mit einer Ausrückanordnung gekoppelt ist, die eine Rotationsbewegung des Stellantriebes in eine translatorische Ausrückbewegung eines Ausrückers zum Betätigen der Kupplung (6) umsetzt, wobei die Bewegungsenergie zur Kupplungsbetätigung außer aus dem Elektromotor (9,11) zusätzlich auch teilweise direkt mechanisch aus dem Antriebsstrang entnommen wird und die Betätigungskraft für die Ausrückbewegung des Ausrückers von der Kennlinie der Tellerfeder (7) und der Betriebsart des Stellantriebes abhängig ist. Die entgegengesetzte Bewegungsrichtung erfolgt zwar im motorischen Betrieb des Elektromotors (9,11), allerdings wird dieser durch die Tellerfeder (7) unterstützt, so dass nur geringe Kräfte zu erzeugen sind und das Bordnetz des Fahrzeuges ebenfalls entlastet wird.

## Beschreibung

Die vorliegende Erfindung betrifft ein Verfahren zum Betätigen zumindest einer Kupplung in einem Antriebsstrang eines Fahrzeuges mit einem Verbrennungsmotor und einem automatisierten Getriebe und einer Kupplungsaktorik zur Durchführung des Verfahrens, welche zumindest einen elektromotorischen Stellantrieb aufweist, der mit einer Ausrückanordnung gekoppelt ist, die eine Rotationsbewegung des Stellantriebes in eine translatorische Ausrückbewegung eines Ausrückers zum Betätigen der Kupplung umsetzt.

Aus der Druckschrift DE 199 51 527 C1 ist eine Steuerung für eine automatisch betätigte Kupplung eines Kraftfahrzeuges und ein Verfahren zum Steuern einer automatisch betätigten Kupplung bekannt. Die Kupplung wird durch einen Aktuator bzw. durch eine Aktorik ein- und ausgerückt, dessen Lage von einem Lageregelkreis gesteuert wird. Der Aktuator weist einen Elektromotor auf, mit dem die Kupplung elektromechanisch betätigt wird.

Der vorliegenden Erfindung liegt die Aufgabe zugrunde, ein Verfahren und ein elektromechanisches Kupplungsbetätigungssystem der eingangs genannten Gattung vorzuschlagen, welches mit geringer Strom- bzw. Leistungsaufnahme arbeitet und einen geringen Bauraum benötigt.

Diese Aufgabe wird durch die Merkmale der Ansprüche 1 und 9 gelöst. Vorteilhafte Ausführungen ergeben sich aus den Unteransprüchen.

Indem die Bewegungsenergie zur Kupplungsbetätigung außer aus dem Elektromotor zusätzlich auch teilweise direkt mechanisch aus dem Antriebsstrang entnommen und damit die Energie des Stellantriebes des Ausrückers nicht ausschließlich über einen Elektromotor zugeführt wird, sinkt die elektrische Energieaufnahme für einen Stellzyklus. Weiter ist die Betätigungskraft für die Ausrückbewegung des Ausrückers von der Kennlinie der Tellerfeder und der Betriebsart des Stellantriebes abhängig. Entweder der Öffnungsvorgang oder der Schließvorgang der Kupplung erfolgt im generatorischen Betrieb des Stellantriebs, so dass keine elektrische Energie aus dem Bordnetz entnommen werden muss. Die entgegengesetzte Bewegungsrichtung erfolgt zwar im motorischen Betrieb, allerdings kann dieser durch die Tellerfeder unterstützt werden, so dass nur geringe Kräfte zu erzeugen sind und das Bordnetz des Fahrzeuges ebenfalls entlastet wird.

Die Aufgabe der Erfindung wird weiterhin dadurch gelöst, dass der Ausrücker aus einer Ausrückanordnung besteht, die aus einem Bandgetriebe, das ein Außen- und ein Innenteil aufweist und einem Stellantrieb gebildet wird, der von einem Elektromotor erzeugt wird. Die Verwendung eines Bandgetriebes für einen Ausrücker dient dazu, eine Rotationsbewegung des Stellantriebes in eine translatorische Ausrückbewegung des Ausrückers zum Betätigen der Kupplung umzusetzen. Dadurch, dass der Rotor des Stellantriebs über das Getriebe drehfest mit der Kurbelwelle verbunden ist, dreht er sich bei ruhender Ausrückbewegung mit der Drehzahl der Kurbelwelle. Um die Rotordrehzahl abzusenken, bremst der Stellantrieb und erzeugt hierzu einen generatorischen Bremsstrom, den er ins Netz zurückspeisen kann und/oder über einen Bremswiderstand in Wärme umwandelt. Für einen Anstieg der Rotordrehzahl über die Kurbelwellendrehzahl muss der Stellantrieb motorisch betrieben werden und nimmt Energie aus dem Versorgungsnetz auf. Um die Energieaufnahme trotz der erhöhten Drehzahl klein zu halten, wird durch die Getriebeauslegung der motorische Betrieb mit der Verstellbewegungsrichtung kombiniert, in der die Tellerfeder den Stellvorgang unterstützt. Im motorischen Betrieb sind somit nur geringe Drehmomente zu erzeugen.

Mit einem Energiespeicher, vorzugsweise einem Doppelschichtkondensator, kann die generatorisch erzeugte Stellenergie auch für den nächsten motorischen Stellvorgang zwischengespeichert und so die Netzbelastung auf ein Minimum reduziert werden.

Bei der konzentrisch um die Getriebeeingangswelle angeordneten Ausrückanordnung ist in vorteilhafter Weise der Stellantrieb in das Bandgetriebe integriert, so dass das Außenteil des Bandgetriebes zumindest indirekt, z. B. über Tellerfederzungen oder dergleichen, mit der Kurbelwelle des Verbrennungsmotors, und das Innenteil des Bandgetriebes mit dem Rotor des Elektromotors auf engstem Raum miteinander gekoppelt werden kann. Es ist auch denkbar, dass ein Spindelmutterantrieb für die Ausrückanordnung verwendet wird.

Die Verwendung eines Federbandgetriebes für eine Ausrückanordnung, bei dem das Außenteil, welches beispielsweise einer Rollenanordnung entsprechen kann, wird in vorteilhafter Weise dazu benutzt, das Außenteil mit der Drehzahl der Kurbelwelle des Verbrennungsmotors und das Innenteil des Federbandgetriebes, welches dem Rotor des Elektromotors entspricht, mit der Drehzahl des Elektromotors zu beaufschlagen. Dadurch kann die Kupplung, die auch eine Kupplung einer Doppelkupplung sein kann, in Abhängigkeit der Drehzahl des Rotors bzw. des Innenteiles des Federbandgetriebes betätigt werden. Es ist auch möglich, dass das Außenteil des Federbandgetriebes über die Tellerfederzungen der jeweiligen Kupplung mit der Kurbelwelle des Verbrennungsmotors gekoppelt wird, wobei das Innenteil des Federbandgetriebes über den Rotor des Elektromotors mit der Drehzahl des Elektromotors beaufschlagt wird.

Anstelle eines Federbandgetriebes kann die Ausrückanordnung auch in vorteilhafter Ausgestaltung aus einem Kugelumlaufgetriebe mit einer Formfeder (Druckfeder- Kugel- Getriebe) gebildet werden.

In weiterer vorteilhafter Ausgestaltung der Erfindung wird der Stellantrieb von einem elektrisch kommutierten, Synchron-Elektromotor gebildet. Allerdings wäre auch ein anderer Elektromotor, der motorisch und generatorisch betrieben werden kann, denkbar.

Vorteilhaft für die Kombination der erwähnten Betriebsarten ist weiterhin, dass der Stator des Elektromotors gehäusefest angeordnet ist und der Rotor des Elektromotors über das Innenteil des Bandgetriebes mit der Kurbelwelle des Fahrzeugantriebs gekoppelt ist.

Weiterhin ist der Rotor des Elektromotors über Kugellager am Kupplungsdeckel befestigt.

Demnach wird durch die erfindungsgemäße Kupplungsaktorik allein durch eine eingestellte Drehzahldifferenz zwischen der Kurbelwelle des Verbrennungsmotors und der Drehzahl des Stellantriebs eine entsprechende Bewegung der Kupplung zum Schließen oder Öffnen erreicht.

Indem das benötigte Stellmoment im motorischen Betrieb des Stellantriebes stärker sinkt als die Drehzahl durch die überlagerte Kurbelwellendrehzahl ansteigt, sinkt auch die Stellleistung. Zusätzlich weist der Elektromotor des Stellantriebes bei hohen Drehzahlen und kleinen Drehmomenten einen deutlich höheren Wirkungsgrad auf. Im motorischen Betrieb muss der Elektromotor zwar deutlich schneller drehen; die benötigten Drehmomente sind jedoch deutlich kleiner. Somit sinkt auch im motorischen Betrieb die Bordnetzbelastung des Fahrzeuges.

Um das Bordnetz beim Kupplungsvorgang zu entlasten, wird beim Öffnen der jeweils eingesetzten Kupplung der Stellmotor des Stellantriebs generatorisch genutzt (der Rotor des Elektromotors wird gegenüber der Kurbelwelle abgebremst).

Wenn eine so genannte selbstnachstellende Kupplung (SAC) bei einem Getriebe zum Einsatz kommt, wir die Kupplung motorisch, also mit einer größeren Drehzahl des Elektromotors als die der Kurbelwelle, geschlossen und generatorisch, also mit einer kleineren Drehzahl des Elektromotors als die der Kurbelwelle, geöffnet. Dadurch wird die größere Betätigungskraft beim Öffnen der Kupplung generatorisch aufgebracht, d. h. der Motor wird, wie bereits erwähnt, abgebremst und es ist keine elektrische Energieaufnahme notwendig. Vielmehr kann eventuell eine Energieabgabe an die Batterie oder einen Zwischenspeicher erfolgen. Zum Schließen der Kupplung ist jedoch der Antrieb des Elektromotors erforderlich, wobei allerdings nur die Systemreibung und das Beschleunigungsmoment energetisch aufgewendet werden muss, um die Kupplung in ihre geschlossene Position zu bringen.

Bei der Verwendung einer so genannten zugedrückten Kupplung (LAC) wird die geschlossene Position dadurch erreicht, indem die Drehzahl des Rotors kleiner als die Drehzahl der Kurbelwelle des Verbrennungsmotors ist. Die offene Position der zugedrückten Kupplung (LAC) wird im Gegensatz dazu dadurch erreicht, wenn die Drehzahl des Rotors größer als die Drehzahl der Kurbelwelle des Verbrennungsmotors ist.

In vorteilhafter Weise kann der elektrische Zentralausrücker der Kupplungsaktorik bei sämtlichen automatisierten Kupplungen bzw. Doppelkupplungen zum Verstellen der jeweiligen Kupplung eingesetzt werden.

Nachfolgend wird die Erfindung anhand der Zeichnung nähert erläutert. Es zeigen:
- Figur 1: eine Teilansicht eines automatisierten Getriebes mit einer Kupplungsaktorik zum Betätigen einer Kupplung zwischen einer Kurbelwelle und eine Getriebeeingangswelle;
- Figur 2: eine Teilansicht eines Getriebes mit einer erfindungsgemäßen Kupplungsaktorik zum Betätigen einer Doppelkupplung;
- Figur 3: die erforderliche Kraft bzw. das erforderliche Stellmoment während der Betätigung einer konventionellen SAC.

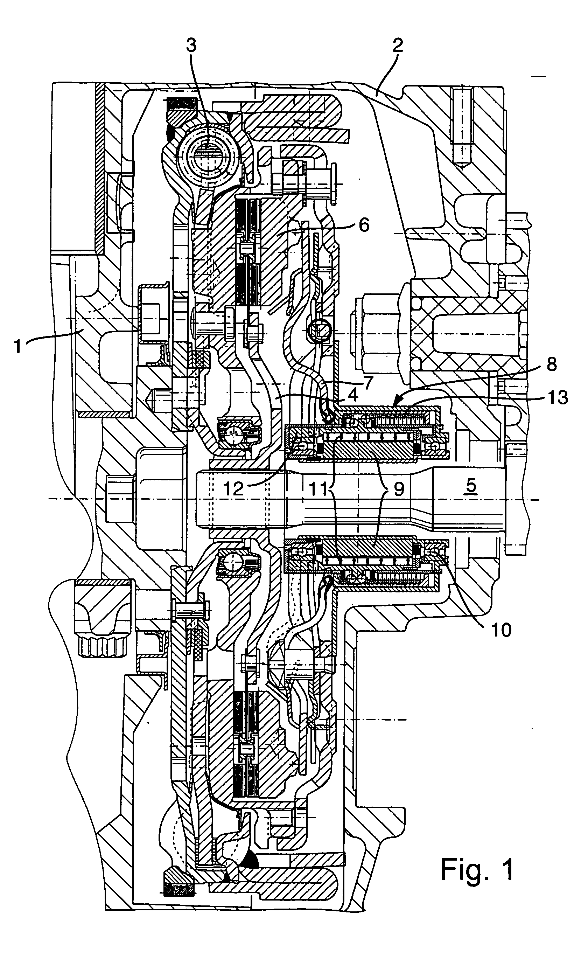

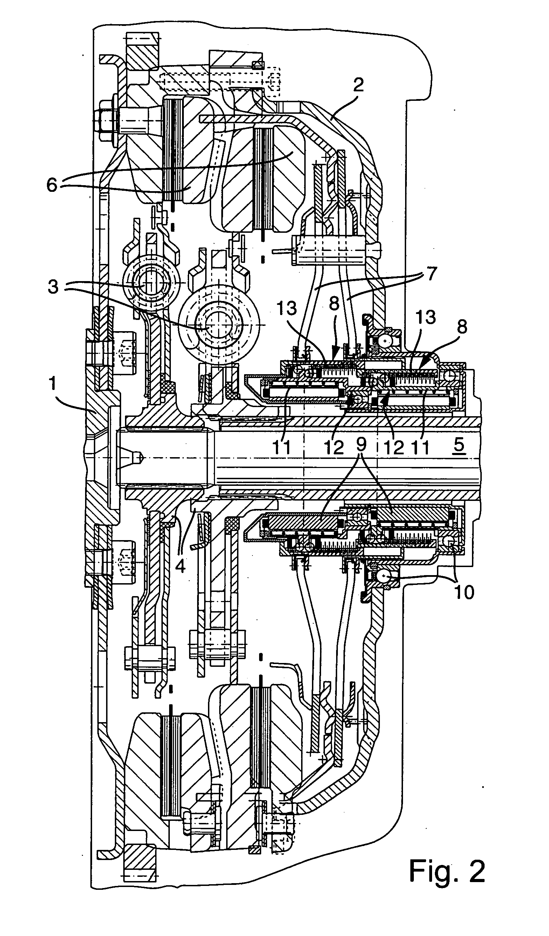

In den Figuren 1 und 2 ist jeweils eine Ausführungsform einer erfindungsgemäßen Kupplungsaktorik 8 zum Betätigen einer Kupplung in einem Antriebsstrang eines Fahrzeuges mit einem Verbrennungsmotor und einem automatisierten Getriebe dargestellt, wobei in Figur 1 die Kupplungsaktorik 8 nur eine einfache Kupplung (konventionelle selbsteinstellende, hier "push"-Kupplung/ SAC) betätigt. In Figur 2 sind zwei Kupplungsaktoriken 8 vorgesehen, um die beiden Kupplungen einer Doppelkupplung (pull-push-SAC) zu betätigen.

Jede Kupplungsaktorik 8 umfasst einen elektromotorischen Stellantrieb, welcher mit einer Ausrückanordnung gekoppelt ist, die eine Rotationsbewegung des Stellantriebes in eine translatorische Ausrückbewegung eines Ausrückers zum Betätigen der Kupplung umsetzt. Die Kurbelwelle 1 des Verbrennungsmotors ist in an sich bekannter Weise mit einem Kupplungsdeckel 2 gekoppelt, welcher ein Zweimassenschwungrad 3 und eine Kupplungsdruckplatte 6 bei der gezeigten Ausführung umgibt. Die Getriebeeingangswelle 5 weist eine Kupplungsscheibe 4 auf, welche zwischen der Kupplungsdruckplatte 6 vorgesehen ist. Die Kupplungsdruckplatte 6 wird wiederum über Tellerfederzungen 7 betätigt, um mit der Kupplungsscheibe 4 gekoppelt zu werden. Die Tellerfederzungen 7 können über die vorgeschlagene Kupplungsaktorik 8 bewegt werden.

Die erfindungsgemäße Kupplungsaktorik 8 umfasst als Stellantrieb einen bürstenlosen elektrisch kommutierten Synchron-Elektromotor auf, der einen Stator 9 aufweist, welcher über ein Lager 10 von der Kupplung entkoppelt gehäusefest angeordnet ist. Der Rotor 11 des Stellantriebes weist ein Innenteil 12 der Ausrückanordnung auf, wobei der Rotor bei Nichtbetätigung der Kupplung mit der Drehzahl der Kurbelwelle 1 des Verbrennungsmotors mitdreht. Der Ausrücker der erfindungsgemäßen Kupplungsaktorik 8 ist als Außenteil 13 der Ausrückanordnung ausgebildet und ist mit den Tellerfederzungen 7 der Kupplung gekoppelt, so dass sich das Außenteil 13 mit der Drehzahl der Kurbelwelle 1 des Verbrennungsmotors mitdreht.

Bei dieser gezeigten Ausführungsform der erfindungsgemäßen Kupplungsaktorik 8 ist als Ausrückanordnung ein Federbandgetriebe gezeigt, wobei das Außenteil 13 der Rollenanordnung bei dem Federbandgetriebe entspricht. Die Rollenanordnung wird zwischen dem Federband bei dem Federbandgetriebe geführt. Das Innenteil 12 entspricht der Innenhülse des Federbandgetriebes.

Um die Kupplung zu betätigen, wird der Stellantrieb verwendet, wobei je nach Drehzahl des Rotors 11 bzw. des Innenteils 12 des Federbandgetriebes die Kupplung geöffnet oder geschlossen wird, indem das Außenteil 13 des Federbandgetriebes in axialer Richtung bewegt wird, so dass die Tellerfederzungen 7 der jeweiligen Kupplung bewegt werden. Zum Schließen einer selbstnachstellenden Kupplung (SAC) kann der Synchronmotor motorisch durch entsprechende Energieaufnahme angetrieben werden, so dass der Rotor 11 bzw. das Innenteil 12 des Federbandgetriebes eine höhere Drehzahl als das mit der Kurbelwelle 1 gekoppelte Außenteil 13 des Federbandgetriebes erreicht, welches quasi als Ausrücker fungiert und die Tellerfederzungen 7 der zugeordneten Kupplung betätigt. Das Schließen der Kupplung kann generatorisch erfolgen, d. h. der Rotor 11 wird abgebremst und es kann eine Energieabgabe an die Batterie erfolgen, wobei sich das Außenteil 13 des Federbandgetriebes in die andere Ausrückrichtung bewegt, um die Kupplung zu schließen.

In Figur 2 ist die erfindungsgemäße Kupplungsaktorik 8 zweifach vorgesehen, da bei diesem Ausführungsbeispiel eine Doppelkupplung eines Parallelschaltgetriebes mit zwei Kupplungen vorhanden ist. Der einzige Unterschied zu Figur 1 liegt darin, dass hier zwei Kupplungen zu betätigen sind, welche jeweils über eine Kupplungsaktorik aktiviert werden. Gleiche Bauteile werden mit den gleichen Bezugszahlen wie in Figur 1 bezeichnet.

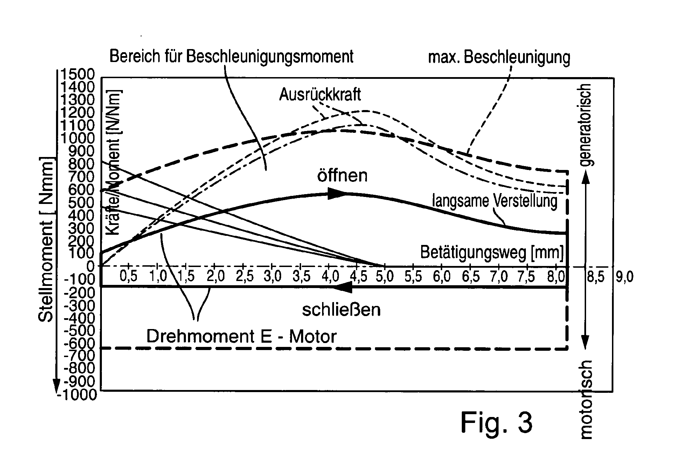

Aus der Figur 3 ist der von der erfindungsgemäßen Ausrückaktorik erforderliche Kraftaufwand während des Betätigungsvorgangs einer konventionellen SAC Kupplung ersichtlich. Aus diesem Kennlinienverlauf ist deutlich erkennbar, dass der Bereich der Betätigungskräfte beim Öffnen und Schließen der Kupplung unterschiedliche Beträge aufweist. Somit wird beim Öffnen der Strom für das die Ausrückkraft erzeugende erforderliche Stellmoment im Generatorbetrieb des Stellantriebs aus der mechanischen Leistung der Kurbelwelle erzeugt und der Schließvorgang zusätzlich durch die Steifigkeit der Kupplung (Kennlinie) unterstützt.

Aus dem Kennlinienverlauf geht somit hervor, dass das Stellmoment der Ausrückaktorik bzw. die Kraft zum Schließen der Kupplung aus dem motorischen Betrieb des Stellantriebs erbracht werden muss, das allerdings sehr gering bleiben kann, da lediglich die Reibung des Bandgetriebes überwunden werden muss. Somit wird das Bordnetz des Fahrzeuges deutlich entlastet - sogar im motorischen Betrieb des Stellantriebes der Ausrückaktorik.

### Bezugszeichenliste

- 1: Kurbelwelle
- 2: Kupplungsdeckel
- 3: Zweimassenschwungrad
- 4: Kupplungsscheibe
- 5: Getriebeeingangswelle
- 6: Kupplungsdruckplatte
- 7: Tellerfederzungen
- 8: Kupplungsaktorik
- 9: Stator
- 10: Lager
- 11: Rotor
- 12: Innenteil
- 13: Außenteil

## Patentansprüche

1. Verfahren zum Betätigen mindestens einer Kupplung mit mindestens einer Tellerfeder in einem Antriebsstrang eines Fahrzeuges mit einem Verbrennungsmotor und einem automatisierten Getriebe, bei dem eine Kupplungsaktorik verwendet wird, welche einen elektromotorischen Stellantrieb und eine Ausrückanordnung umfasst, mit der eine Rotationsbewegung des Stellantriebes in eine translatorische Ausrückbewegung eines Ausrückers zum Betätigen der Kupplung umgesetzt wird, **dadurch gekennzeichnet, dass** die Bewegungsenergie zur Kupplungsbetätigung außer aus dem Elektromotor zusätzlich auch teilweise direkt mechanisch aus dem Antriebsstrang entnommen wird.

2. Verfahren nach Anspruch 1, **dadurch gekennzeichnet, dass** der Stellantrieb in zwei Betriebarten arbeitet, wobei er beim Öffnen der Kupplung generatorisch und beim Schließen der Kupplung motorisch angetrieben wird.

3. Verfahren nach Anspruch 1 und 2, **dadurch gekennzeichnet, dass** die Betätigungskraft für die Ausrückbewegung des Ausrückers von der Kennlinie der Tellerfeder und der Betriebsart des Stellantriebs abhängig ist.

4. Verfahren nach Anspruch 1, **dadurch gekennzeichnet, dass** die Differenz der Drehzahl zwischen der Kurbelwelle (1) des Verbrennungsmotors und der des Stellantriebes mit der entsprechenden Betriebsart des Stellantriebs zur Betätigung der Kupplung kombiniert wird.

5. Verfahren nach Anspruch 1, **dadurch gekennzeichnet, dass** eine selbstnachstellende Kupplung (SAC) in ihre geschlossene Position bewegt wird, wenn die Drehzahl des Stellantriebes größer als die Drehzahl der Kurbelwelle (1) des Verbrennungsmotors gewählt wird.

6. Verfahren nach Anspruch 1, **dadurch gekennzeichnet, dass** eine selbstnachstellende Kupplung (SAC) in ihre offene Position bewegt wird, wenn die Drehzahl des Stellantriebes kleiner als die Drehzahl der Kurbelwelle (1) des Verbrennungsmotors gewählt wird.

7. Verfahren nach Anspruch 1, **dadurch gekennzeichnet, dass** eine zugedrückte Kupplung (LAC) in ihre geschlossene Position bewegt wird, wenn die Drehzahl des Stellantriebes kleiner als die Drehzahl der Kurbelwelle (1) des Verbrennungsmotors gewählt wird.

8. Verfahren nach Anspruche 1, **dadurch gekennzeichnet, dass** eine zugedrückte Kupplung (LAC) in ihre offene Position bewegt wird, wenn die Drehzahl des Stellantriebes größer als die Drehzahl der Kurbelwelle (1) des Verbrennungsmotors gewählt wird.

9. Kupplungsaktorik zum Betätigen mindestens einer Kupplung mit mindestens einer Tellerfeder in einem Antriebsstrang eines Fahrzeuges mit einem Verbrennungsmotor und einem automatisierten Getriebe, bei dem eine Kupplungsaktorik verwendet wird, welche einen elektromotorischen Stellantrieb und eine Ausrückanordnung umfasst, mit der eine Rotationsbewegung des Stellantriebes in eine translatorische Ausrückbewegung eines Ausrückers zum Betätigen der Kupplung umgesetzt wird, **dadurch gekennzeichnet, dass** der Ausrücker (Ausrückanordnung) aus einem Bandgetriebe besteht, das ein Außenteil (13) und ein Innenteil (12) aufweist und der Stellantrieb für den Ausrücker von einem Elektromotor gebildet wird, wobei das Außenteil (13) des Bandgetriebes mit der Kurbelwelle (1) des Verbrennungsmotors und das Innenteil (12) des Bandgetriebes mit dem Rotor (11) des Elektromotors gekoppelt ist.

10. Kupplungsaktorik nach Anspruch 8, **dadurch gekennzeichnet, dass** der Stellantrieb in das Bandgetriebe integriert ist.

11. Kupplungsaktorik nach Anspruch 8, **dadurch gekennzeichnet, dass** der Stellantrieb von einem elektrisch kommutierten, Synchron-Elektromotor gebildet wird.

12. Kupplungsaktorik nach Anspruch 8, **dadurch gekennzeichnet, dass** der Stator (9) des Elektromotors gehäusefest angeordnet ist.

13. Kupplungsaktorik nach Anspruch 8, **dadurch gekennzeichnet, dass** der Rotor (11) des Elektromotors über das Innenteil (12) des Bandgetriebes mit der Kurbelwelle gekoppelt ist.

14. Kupplungsaktorik nach Anspruch 8, **dadurch gekennzeichnet, dass** der E-Motor über Kugellager am Kupplungsdeckel befestigt ist.

15. Kupplungsaktorik nach Anspruch 8, **dadurch gekennzeichnet, dass** die Ausrückanordnung ein Federbandgetriebe umfasst.

16. Kupplungsaktorik nach Anspruch 8, **dadurch gekennzeichnet, dass** die Ausrückanordnung aus einem Kugelumlaufgetriebe mit einer Formfeder (Druckfeder- Kugel-Getriebe) gebildet wird.
